Europäisches Patentamt

European Patent Office

Office européen des brevets

(19)

(11) Publication number: **0 109 785**

**A2**

(12) **EUROPEAN PATENT APPLICATION**

(21) Application number: **83306597.2**

(22) Date of filing: **28.10.83**

(51) Int. Cl.³: **B 01 D 17/04**

(30) Priority: **19.11.82 US 442944**

(43) Date of publication of application:
**30.05.84 Bulletin 84/22**

(84) Designated Contracting States:
**DE FR NL**

(71) Applicant: **THE DOW CHEMICAL COMPANY**
**Dow Center 2030 Abbott Road Post Office Box 1967**
**Midland Michigan 48640(US)**

(72) Inventor: **Tasset, Emmett L.**
**244 Lake Wood Drive Clute**
**Brazoria Texas(US)**

(72) Inventor: **Richey, Warren F.**
**316 Linden Lane Lake Jackson**
**Lake Jackson Texas 77566(US)**

(74) Representative: **Allard, Susan Joyce et al,**
**BOULT, WADE & TENNANT 27 Furnival street**
**London EC4A 1PQ(GB)**

(54) Use of quaternized polyalkylene polyamines as demulsifiers.

(57) Emulsions of oil and water are broken by contacting the
emulsions with a quaternized polyalkylene polyamine e.g.,
the adduct of 3-chloro-2-hydroxypropyltrimethylammonium
chloride and a polyethylene polyamine.

EP 0 109 785 A2

USE OF QUATERNIZED POLYALKYLENE
POLYAMINES AS DEMULSIFIERS


This invention relates to the use of quaternized polyamines in the preventing, breaking or resolving of emulsions of the water-in-oil type as well as oil-in-water type emulsions.

Most naturally occurring emulsions of petroleum oil and water take the form of water-in-oil emulsions in which the oil is a continuous phase and tiny drops of water are dispersed in the oil. Occasionally, however, oil-in-water emulsions are often encountered either in the production, handling or refining of petroleum oil or fractions thereof. Unfortunately, in both cases the emulsions are often extremely stable and will not resolve after standing for long periods. While such emulsions often occur naturally, such emulsions may also occur artificially resulting from one or more of numerous operations encountered in various industries. For example, such emulsions may be obtained from producing wells as a result of enhanced oil recovery methods or from the bottom of crude oil storage tanks. Other such oil-in-water emulsions include steam cylinder emulsions, wax-hexane-water emulsions, butadiene-tar-in-water emulsions, emulsions of flux oil and steam condensate, styrene-in-water emulsions and synthetic latex-in-water emulsions. In all instances, it is generally desirable to resolve the emulsion in order that the oil phase may be separated from the water phase.

Historically, such emulsions have been resolved or broken by contacting the emulsion with a chemical demulsifying agent thereby causing the emulsions to resolve and stratify into its component phases of water and oil or brine and oil after the emulsion has been allowed to stand in a relatively quiescent state. In another type of demulsification, the emulsion contains substantial quantities of salt in the aqueous phase and it is necessary to carry out a desalting operation prior to further refinement of the oil phase in order to prevent the accumulation of large deposits of salt in the refining apparatus. In such desalting operations, it is common to employ a chemical demulsifying agent in a manner similar to that described hereinbefore. A wide variety of chemical demulsifying agents has been employed in this manner in the past. For example, such demulsifying agents include oxyalkylated condensation products obtained by reacting phenols, formaldehydes and alkylene polyamines as disclosed in U.S. Patent No. 3,166,516; ultra high molecular weight ethylenically unsaturated polymers, polyalkyleneoxy polymers, poly-esters, polyamides, polymer of ketenes and the like as described in U.S. Patent No. 3,557,017; amidoamine polymers as described in U.S. Patent No. 3,528,928; as well as other chemicals such as sulfonates, oxyalkylated amines, oxyalkylated alkylphenols, oxyalkylated alcohols

and the like. While each of the foregoing and other conventional demulsifiers are effective in some emulsions, it is found that many are not as effective as desired, particularly in resolving emulsions derived from steam recovery of heavy crudes by processes typical of some of the California oil fields.

Accordingly, it is highly desirable to provide a demulsification process for resolving emulsions of such heavy crudes as well as other water-in-oil emulsions and the like.

The present invention is such a demulsification method which comprises contacting an emulsion of oil and water with a quaternized polyalkylene polyamine which is the adduct of a halohydroxyalkyl quaternary ammonium compound, a polyalkylene polyamine and a polyhaloalkanol.

While the demulsification method of the present invention is particularly effective in resolving emulsions of water in heavy crudes as are commonly recovered from the California oil fields, such demulsification method is also effective for resolving other emulsions of oil-in-water and water-in-oil.

More particularly, the present invention resides in a demulsification method which comprises contacting an emulsion of oil and water with a demulsifying amount of a quaternized polyalkylene polyamine which is an adduct of a halohydroxyalkyl quaternary ammonium compound, a polyalkylene polyamine and a polyhaloalkanol.

The present invention also resides in a quaternized polyalkylene polyamine which is an adduct of a halohydroxyalkyl quaternary ammonium compound, a polyalkylene polyamine and a polyhaloalkanol.

Emulsions of oil-in-water that are most effectively resolved by the method of this invention are oil field emulsions containing relatively small proportions of crude petroleum oil dispersed in water or brine and are hereinafter characterized as oil--in-water emulsions. Other such oil-in-water emulsions include emulsions in which traces of lubricating oil are found dispersed in steam from steam engines and steam pumps often called steam-cylinder emulsions; emulsions encountered in the waxing operations in oil refining, often called wax-hexane-water emulsions; emulsions of flux oil in steam condensate produced in the catalytic dehydrogenation of butylene to produce butadiene; styrene-in-water emulsions; emulsions generated by sewage disposal operations and the like. Although not as preferably resolved as the oil-in-water emulsions, water-in-oil emulsions are suitably treated by the method of this invention. Such water-in-oil emulsions are generally those naturally occurring emulsions of water and petroleum oil wherein the continuous oil phase has tiny droplets of water dispersed therein.

The preferred oil-in-water emulsions may contain widely different proportions of dispersed phase. For example, the oil field emulsions may carry crude oil in proportions varying from a few parts per million to 40 weight percent or higher in rare cases. All of such emulsions are suitably treated in the practice of this invention, most preferably, however, such oil-in-water emulsions contain from 0.01 to 30 weight percent of oil based on the weight of the emulsions. Also, while the method of the present invention is effective in treating emulsions derived from light crudes, the method is most effective in treating emulsions of somewhat heavier crudes wherein the crude has a specific gravity in the range from 0.8 to 0.97 gram/milliliter.

The quaternized polyalkylene polyamines employed in the present invention are adducts of poly-alkylene polyamines, polyhaloalkanols and halohydroxy-alkyl quaternary ammonium compounds. For the purposes of this invention, examples of suitable polyhaloalkanols include 1,3-dichloropropan-2-ol, 1,2-dichloropropan-3-ol, epichlorohydrin, 1-dichloroisopropoxy-1-chloro-2-hydroxypropane and other alkanols having from 2 to 4 halogens and from 3 to 6 carbons, with 1,3-dichloropropan-2-ol being preferred.

Exemplary polyalkylene polyamines include ethylenediamine, diethylenetriamine, triethylenetetramine, tetraethylenepentamine, pentaethylenehexamine, hexaethyleneheptamine, 1-aminoethylpiperazyl diethylenetriamine, 1-aminoethylpiperazyl triethylenetetramine, propylenediamine, dipropylenetriamine, butylenediamine, aminoethylpropylenediamine and other polyamines having at least one primary amino group separated from another primary amino or secondary amino group by 2 to 4 carbon atoms. Of these polyalkylene polyamines, the higher molecular weight polyethylene polyamines and polypropylene polyamines such as those having a number average of 100 to 15,000 are preferred. Of particular interest are the polyalkylene polyamines that are cross-linked with ethylene dichloride or the like as well as mixtures of such cross-linked polyamines with other polyalkylene polyamines as mentioned hereinbefore.

Examples of suitable quaternary ammonium salts include 3-chloro-2-hydroxypropyltrimethylammonium chloride, and similar hydroxyhaloalkyltrialkylammonium chlorides and other halohydroxyalkyltrialkylammonium halides, with 3-chloro-2-hydroxypropyltrimethylammonium chloride being preferred.

The adduct of the polyalkylene polyamine, polyhaloalkanol and quaternary ammonium salt is advantageously prepared by adding the quaternary ammonium salt to the polyalkylene polyamine at ambient temperature which exotherms to above 90°C. The polyhaloalkanol is then added to the reaction mixture. The mixture is adjusted to alkaline conditions, e.g., pH = 8, by the addition of an aqueous solution of sodium hydroxide or other strong base, and the resulting mixture is then heated, e.g., to 100°C for 30 minutes, until the reaction is completed. While the ratio of the quaternary salt to polyalkylene polyamine to polyhaloalkanol in the adduct is not particularly critical, it is generally desirable that (1) the molar ratio of quaternary ammonium moiety to amino moiety in the polyalkylene polyamine be in the range from 0.03:1 to 0.4:1, preferably from 0.07:1 to 0.1:1 and (2) the molar ratio of the polyhaloalkanol to amino moiety in the polyalkylene polyamine be in the range from 0.03:1 to 0.08:1, preferably from 0.04:1 to 0.06:1.

In the practice of this invention, the emulsion to be resolved is contacted with an amount of the adduct which is sufficient to cause the emulsion to separate into two essentially distinct phases upon standing. Generally, such an amount will be in the range from 1 to 1,000 weight parts of the adduct per million weight parts (ppm) of the emulsion, preferably from 10 to 100 ppm.

The following examples are given to further illustrate the detailed practice of the invention and should not be construed as limiting its scope. Unless otherwise indicated, all parts and percentages are by weight.

Example 1

I. Preparation of Adduct

To a 500-ml flask is added 100 g (0.39 mole) of polyethylene polyamine (PEPA) having a number average molecular weight ($M_n$) of 254 and then with stirring, 67.6 g (0.18 mole) of 3-chloro-2-hydroxypropyltrimethylammonium chloride (Q-188) over 30 minutes. The temperature of the reaction mixture increases to about 90°C. To this mixture is added 41.9 g (0.1 mole) of a 30 percent solution of 1,3-dichloropropan-2-ol (DCP) in methylene chloride over 15 minutes. The methylene chloride is removed by devolatilization and 30.4 g (0.38 mole) of a 50 percent solution of NaOH in water is added to the mixture over 30 minutes while maintaining the temperature at 100°C. The mixture is maintained at 100°C for an additional 6 hours and then cooled and filtered to remove NaCl. The resulting adduct has a $M_n$ of ~380 and a mole ratio of amine to quaternary ammonium moieties of 1:0.076. Other adducts having different mole ratios of amine to quaternary ammonium moieties as specified in Table I are similarly prepared.

## II. Emulsion Preparation

### Emulsion #1

This oil-in-water emulsion is prepared by adding 10 parts of crude oil from Flatonia, Texas to 90 parts of water containing 1000 ppm of $NaHCO_3$ and then mixing in a Waring Blender.

### Emulsion #2

This oil-in-water emulsion is prepared by adding 10 parts of the Flatonia crude to 90 parts of water containing 562.5 ppm NaCl, 2250 ppm $NaHCO_3$ and 900 ppm $Na_2CO_3$, and then mixing in a Waring Blender.

### Emulsion #3

This oil-in-water emulsion is prepared by adding 10 parts of Arabian light crude to 90 parts of water and then mixing in a Waring Blender.

## III. Emulsion Resolution

### A. Effect of Adduct Concentration

To a graduated cylinder are added 100 ml of (1) Emulsion #1 and then (2) one of the aforementioned adducts in a concentration as specified in Table I. The emulsion and adduct are mixed by slowly rolling the cylinder twenty times. After this agitation, the mixture is allowed to stand quiescent for 10 minutes and the amount of oil separating as a layer from the aqueous phase is observed by determining the ml of separate oil phase in the cylinder. The results of this observation are shown in Table I.

## TABLE I

| Sample No. | Adduct[1] $-NR_3^{\oplus}/-NH_2$, molar | Concentration[2], ppm | Separate Oil Phase, ml |
|---|---|---|---|
| 1A | 0.076 | 5 | 0 |
| 1B | 0.076 | 10 | 2 |
| 1C | 0.076 | 50 | 10 |
| 1D | 0.076 | 100 | 10 |
| 2A | 0.364 | 5 | 0 |
| 2B | 0.364 | 10 | 2 |
| 2C | 0.364 | 50 | 10 |
| 2D | 0.364 | 100 | 10 |
| 3A | 0.09 | 5 | 1.5 |
| 3B | 0.09 | 10 | 2 |
| 3C | 0.09 | 50 | 10 |
| 3D | 0.09 | 100 | 10 |

[1]Adduct having $-NR_3^{\oplus}/-NH_2$ molar ratio of 0.076 is the one specifically described in this example and hereinafter called Adduct No. 1; adduct having $-NR_3^{\oplus}/-NH_2$ ratio of 0.364 is prepared by reacting 0.39 mole of PEPA with 0.86 mole of Q-188 and 0.09 mole of DCP in presence of 1.83 moles of NaOH using the procedure of preparing previous adduct; adduct having $-NR_3^{\oplus}/-NH_2$ ratio of 0.038 is prepared by reacting 0.39 mole of PEPA with 0.09 mole of Q-188 and 0.19 mole of DCP in the presence of 0.49 mole of NaOH using the foregoing procedure.

[2]Concentration in parts of adduct per million parts of emulsion.

B. <u>Effect of Time and Adduct Concentration</u>

Using the foregoing emulsion resolution procedure, Adduct No. 1 is evaluated at different times and different concentrations using Emulsion #2. The results are reported in Table II.

TABLE II

| Sample No. | Adduct Concentration[1], ppm | Time[2], min | Separate Oil Phase, ml |
|---|---|---|---|
| 1A | 5 | 0.5 | 4 |
| 1B | 5 | 3 | 4 |
| 1C | 5 | 10 | 4 |
| 2A | 10 | 0.5 | 1 |
| 2B | 10 | 3 | 2 |
| 2C | 10 | 10 | 2 |
| 3A | 50 | 0.5 | 9 |
| 3B | 50 | 3 | 9 |
| 3C | 50 | 10 | 9 |

[1]Concentration in parts of adduct per million parts of emulsion.

[2]Time in minutes after agitation (i.e., rolling of graduated cylinder) is stopped.

## C.  Clarification of Aqueous Phase

Using the aforementioned emulsion resolution procedure, Adduct No. 1 is evaluated in the resolution of Emulsifier #3 at the concentrations specified in Table II. The results of evaluation are shown in Table III.

TABLE III

| Sample No. | Adduct | | Time to Clear Aqueous Phase[2], hours |
|---|---|---|---|
| | Type | Concentration[1], ppm | |
| 1 | No. 1 | 10 | 5.5 |
| 2 | No. 1 | 50 | 16 |

[1]Concentration in parts of adduct per million parts of emulsion.

[2]Time in hours after agitation is stopped until aqueous phase becomes transparent.

As evidenced by the data in Tables I-III, the adducts employed in this invention are effective demulsifiers for oil-in-water emulsions.

CLAIMS:

1. A demulsification method which comprises contacting an emulsion of oil and water with a demulsifying amount of a quaternized polyalkylene polyamine which is an adduct of a halohydroxyalkyl quaternary ammonium compound, a polyalkylene polyamine and a polyhaloalkanol.

2. A method as claimed in Claim 1 wherein the emulsion is an oil-in-water emulsion.

3. A method as claimed in Claim 2 wherein the oil phase of the emulsion is crude oil having a density in the range from 0.8 to 0.97 gram/milliliter.

4. A method as claimed in any one of the preceding claims wherein the halohydroxyalkyl quaternary ammonium compound is a halohydroxyalkyl-trimethylammonium halide.

5. A method as claimed in Claim 4 wherein the quaternary ammonium compound is 3-chloro-2-hydroxypropyltrimethylammonium chloride.

6. A method as claimed in any one of the preceding claims wherein the polyalkylene polyamine has a number average molecular weight in the range of from 100 to 15,000.

7. A method as claimed in Claim 6 wherein the polyhaloalkanol is 1,3-dichloropropan-2-ol.

8. A method as claimed in any one of the preceding claims wherein the ratio of quaternary ammonium moiety to amine moiety in the quaternized polyalkylene polyamine is in the range from 0.03:1 to 0.4:1 and the mole ratio of polyhaloalkanol to amine moiety is in the range from 0.03:1 to 0.08:1.

9. A method as claimed in any one of the preceding claims wherein the demulsifying amount is in the range from 10 to 100 weight parts of the adduct per million weight parts of the emulsion.

10. A quaternized polyalkylene polyamine which is an adduct of a halohydroxyalkyl quaternary ammonium compound, a polyalkylene polyamine and a polyhaloalkanol.